Europäisches Patentamt

European Patent Office

Office européen des brevets

(11) Publication number: **0 531 923 A2**

# EUROPEAN PATENT APPLICATION

(21) Application number: **92115296.3**

(51) Int. Cl.5: **H04N 1/40**

(22) Date of filing: **07.09.92**

(30) Priority: **10.09.91 US 757107**

(43) Date of publication of application:
**17.03.93 Bulletin 93/11**

(84) Designated Contracting States:
**DE FR GB**

(71) Applicant: **EASTMAN KODAK COMPANY**
**343 State Street**
**Rochester, New York 14650-2201(US)**

(72) Inventor: **Ghaderi, Mohsen, c/o Eastman**
**Kodak Company**
**Patent Legal Staff, 343 State Street**
**Rochester, New York 14650-2201(US)**

(74) Representative: **Wagner, Karl H.**
**WAGNER & GEYER European Patent**
**Attorneys Gewürzmühlstrasse 5**
**W-8000 München 22 (DE)**

(54) Method and apparatus for gray-level quantization.

(57) A quantizer (22) in an image-processing system (10) establishes, as it scans through the image, a running background level that is roughly equal to the average of all input values that it has so far encountered below a certain upper cut-off level. It uses this value as the lowest quantization threshold. It then establishes the values of the remaining quantization thresholds by way of a value (IMG) identified as being roughly in the center of the range of values of the pixels are "most interesting" in the image in accordance with certain variation-based criterion. In this way, desirable contrast for textual-type images is obtained while system resolution is focused in those regions where the most-valuable information is present.

FIG. 4

## BACKGROUND OF THE INVENTION

The present invention is directed to image processing. It finds particular, although not exclusive, application to image-processing systems intended for textual and similar images.

Copiers and other image-capturing equipment scan analog documents and produce digital signals that represent the values of picture elements ("pixels") of which the copying system treats the source image as being comprised. In a large percentage of applications, the source images are of the textual type. That is, the images are letters, numbers, and line-drawing graphics in which the original information lay completely in the presence of a black or white level; no information was initially intended to be conveyed by any shade of gray.

For a number of reasons, however, the imaging process must typically deal with shades of gray. This is partially because lighting environments of different images vary and partially because repeated copying and so forth has made different parts of the, say, "black" regions lighter than other parts. Additionally, the use of gray levels reduces the visibility of "jaggies" that result from the spatially discrete nature of the scanning process. As a consequence of these factors, an intolerable loss in legibility could result if the images were recorded simply as black or white, i.e., if the intensity levels were recorded in only one bit per pixel. Accordingly, it is necessary in most cases to record the images in a gray-scale (multi-bit) representation.

Efforts have nonetheless been made to reduce the number of bits per pixel while retaining legibility. For instance, U.S. Patent No. 4,853,969 to Weideman describes an adaptive quantization technique, in which the high-intensity-resolution representation in the initial data capture is reduced for storage or processing so as to limit the cost or increase the speed of the apparatus for performing those functions. The Weideman arrangement reduces the number of bits per pixel while retaining a fair amount of the effective resolution by adapting the values of a fixed number of quantization thresholds, and thus the sub-ranges that pairs of adjacent levels define, in accordance with the input values that the quantization process is to quantize.

Specifically, when an input value falls between adjacent quantization thresholds, the Weideman arrangement generally moves those thresholds closer together. The general effect is that quantization thresholds tend to "bunch up" in the parts of the input range where values actually occur and tend to be sparsely spaced in other parts. The likelihood that different input values will be resolved in the fewer-bit-per-pixel output is therefore considerably greater than it would be if the quantization thresholds were evenly spaced. At the same time, however, such an arrangement tends to detract from the contrast that is ordinarily desirable for text-type images and is often desirable for other types of images, too.

## SUMMARY OF THE INVENTION

I have developed an adaptive quantization method, and apparatus for performing it, that tend to maintain a level of resolution in the parts of the input range in which it is most important to do so and yet produce the high contrast that is desirable in many types of images.

It is an improvement in the type of image processing in which an image source is scanned to generate raw pixel values representing a raw version of the source's image, processed pixel values are generated by performing an image process on the raw pixel values, and the resulting processed image values are stored in an appropriate medium or the image that they represent is displayed. Such image processing may comprise a set of one or more processing steps, each of which produces associated pixel-value outputs representing a version of the image by processing associated pixel-value inputs representing the values of corresponding pixels in at least one other version of the image, such as the raw version that results from the scanning process or another version produced by one of the other processing steps.

According to the present invention, the image processing includes a quantization step. In the quantization step, each pixel has a background range derived for it from the values of other pixels in a version of the image. Quantization levels are then established outside the background range, and the pixel value outputs associated with the quantization step are generated by quantizing the pixel values associated with the quantization step in accordance with the set of quantization levels thus established.

## BRIEF DESCRIPTION OF THE DRAWINGS

These and further features and advantages of the present invention are described in connection with the accompanying drawings, in which:

Fig. 1 is a block diagram of an image-processing system that employs the teachings of the present invention;

Fig. 2 is a diagram depicting windows employed in the image processing;

Figs. 3A and 3B together form a modified flow chart depicting the manner in which the illustrated embodiment of the present invention determines certain parameters upon which the quantization-level determination of the present invention is based; and

Fig. 4 is a modified flow chart depicting the manner in which the illustrated embodiment determines a background variation level.

## DETAILED DESCRIPTION OF AN ILLUSTRATIVE EMBODIMENTS

A typical image-processing system 10 of the type in which the present invention might be employed produces for a memory 12 or a display 14 output data that represent an image obtained from an image source, such as microfilm 16 illuminated by a light source 18 and scanned by a scanner 20 to produce raw pixel values representing the scanned image. The benefits of the present invention can be obtained with many types of images. In the illustrated embodiment, the expected image is textual, specifically, black characters on a white background, and lower values represent lighter areas while higher values represent darker areas.

The image process may employ a number of process steps, each of which receives as its input the raw version of the image produced by the scanner and/or one or more of the other versions of the image produced by other process steps and generates a modified version of that image as its output. The salient features of the present invention are incorporated in a quantizer 22, which typically, although not necessarily, follows other image-processing elements, such as an adaptive filter 24, and may be followed by other elements. In the illustrated embodiment, the quantizer 22 quantizes the adaptive-filter output in accordance with parameters that it determines from the raw output of the scanner 20.

Quantizers typically receive pixel values expressed in a relatively large number M of bits per pixel and convert them to corresponding values expressed in a smaller number N of bits per pixel. In doing so, a quantizer at least implicitly establishes quantization thresholds and quantization sub-ranges. Each pair of successive quantization thresholds defines a quantization sub-range, and all pixels whose input values fall within a given sub-range are assigned the same output pixel value. That is, given an ordered sequence of quantisation levels $T_i$, where $T_{i-1} < T_i < T_{i+1}$, a pixel's output value is $i$ if its input pixel value falls between $T_{i-1}$ and $T_i$.

According to the invention, the total quantizer input range is divided between a "background" range and a "signal" range separated by a boundary determined in accordance with the incoming pixel values in a version of the image being processed. The quantization thresholds are then chosen to occupy the signal range--which in text-type images is typically the range occupied by characters--while remaining outside the background range so that the background range occupies only one of the sub-ranges that the quantization thresholds define.

The manner in which the background range is determined is not critical, but I have found that a good way to choose it is to employ as a threshold between the background and signal ranges a level that is roughly the average of the pixel values in the image version upon which the background range is based, or at least the average of those values that occupy a predetermined part of the range permitted by the number system in which the pixel values are provided.

In situations in which the quantization is to be carried out in a one-pass method--i.e., in which output values are generated more or less concurrently with the receipt of input data values so that it ordinarily is not possible to run a first pass through the image in order to determine an average and then run a second pass for the actual quantization--the background level that is used may evolve as the single pass through the image proceeds, being increased or decreased in accordance with the values of local averages. The embodiment depicted in the drawings is an example of such an approach.

In some embodiments of the invention, both ends of the quantization-threshold range may be set adaptively; not only is one end of the range set in accordance with the background level, but the other end is set by other characteristics of image pixel values. Again, although the particular manner in which the levels are determined from the signal-range data is not critical, I have found a certain variation-based method to be particularly beneficial.

The threshold sequence in the illustrated embodiment is determined in accordance with three image-dependent parameters BCK_LEVEL, IMG, and UPPER_THR. The manner in which these parameters are determined from the image will be described in detail below.

With these parameters determined, the lowest threshold is set equal to BCK_LEVEL; all input values below this are assigned an output value of zero. As will be explained below, BCK_LEVEL is established in such a manner as usually to have a value just a little above the general background level in the particular image being quantized.

Similarly, all input values above UPPER_THR are given the same, maximum value of $2^N-1$. The intermediate quantization thresholds can be determined in any number of ways, the one described in the Weideman patent mentioned above being one of them. Another way is simply to divide the range between BCK_LEVEL and UPPER_THR into $2^N-2$ equal sub-ranges by equally spacing the remaining $2^N-3$ quantization thresholds. Another example, which I use in the illustrated embodiment, is to divide that range between BCK_LEVEL and UPPER_THR into two parts, the lower part being the range between BCK_LEVEL and IMG and the upper part being the range between IMG and UPPER_THR. IMG is so chosen, in a manner described below, as to be in the midst of the values assumed by pixels at "interesting" positions, such as the edges of characters, in the image. I put half of the quantization thresholds in each part, spacing them equally within each part so that all sub-ranges in the lower part are of the same size and all those in the upper part are of the same size, but all those in one part are not in general of the same size as those in the other part.

I depart from this general approach in those cases in which the number of output bits per pixel is the same as the number of input bits per pixel or is only one less.

It will be appreciated that the quantization operation does not necessarily require a reduction in the number of bits per pixel; imposition of quantization thresholds different from those implicitly employed in the input data might be used to generate output values different from the input values even though input and output values are expressed in the same number of bits per pixel. Thus, quantization does not necessarily mean reduction in the number of bits per pixel, either generally or as applied to the present invention. As will become apparent as the description proceeds, the legibility benefits of the present invention can result even in applications in which there is no reduction in the number of bits per pixel.

If the number of output bits per pixel is the same as the number of input bits per pixels or differs from it by only one, I prefer to divide the "signal" range above BCK_LEVEL into equal sub-ranges. When the number of output bits per pixel is the same as the number of input bits per pixel, for instance, I compute the output value $P_o$ from the input value $P_i$ in accordance with the following formula, which effectively employs quantization thresholds that are equally spaced throughout the signal range:

$$P_o = \text{trunc}\left[\frac{(2^M-1)(P_i-\text{BCK\_LEVEL})}{2^M-1-\text{BCK\_LEVEL}}\right], \qquad (1)$$

where trunc(x) means truncation, i.e., taking the largest whole number that is less than x. I use a similar approach when the number of bits per pixel in the output is only one less than the number in the input:

$$P_o = \text{trunc}\left[\frac{(2^M-1)(P_i-\text{BCK\_LEVEL})}{(2)(2^M-1-\text{BCK\_LEVEL})}\right]. \qquad (2)$$

The only other departure from the general approach occurs in the degenerate case in which there is only one output bit per pixel. In that case, I use IMG as the sole quantization threshold.

We now turn to the manner in which the parameters BCK_LEVEL, IMG, and UPPER_THR are determined. The pixel values from which the parameters are derived could be drawn from the same version of the image as those compared with the quantization thresholds, e.g., in the illustrated embodiment, from the image version that the adaptive filter produces. This is not necessary, however; as was stated above, the illustrated embodiment derives the parameters BCK_LEVEL, IMG, and UPPER_THR from the raw version produced by the scanner 20 rather than from the version produced by the filter 24.

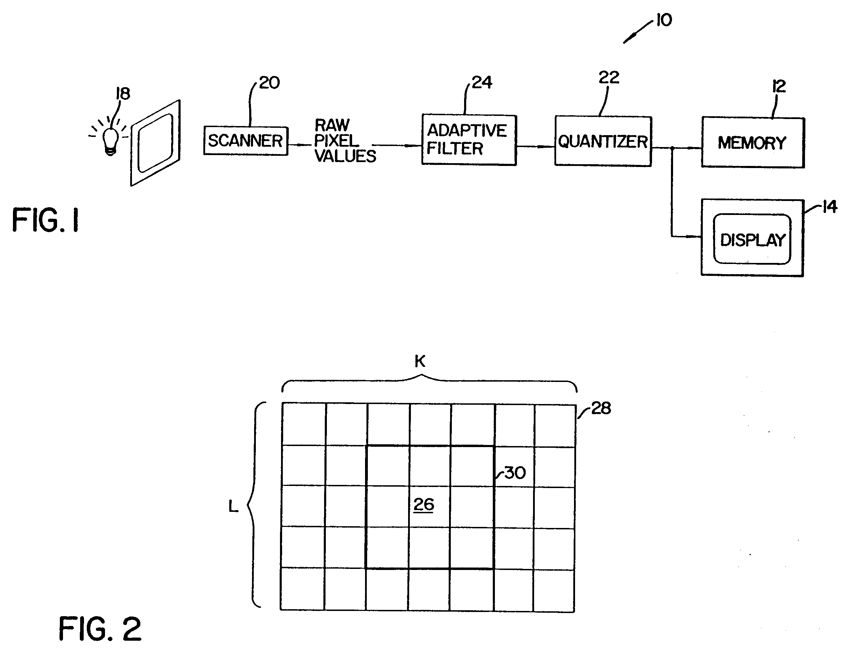

In determining these parameters, it first calculates some intermediate values that it uses to update them. For each pixel 26 (Fig. 2), the quantizer establishes two windows, a larger window 28 and a smaller window 30. The larger window 28 is a neighborhood within which an average neighborhood level $M_a$ and an "activity level" $M_d$, i.e., a variation measure, are computed. The inner window 30 is one over which a low-pass filter is applied to filter out noise before certain tests to be described below are applied. The window sizes and shapes are merely exemplary; indeed, although the pixel 26 under consideration is shown as

4

being centered in both windows, as it typically would be, such centering is not at all critical to the operation of the invention.

In the description that follows, the operations for updating the quantization-threshold-determining parameters is depicted in the flow-chart form usually employed to depict programs for general-purpose processors, and, indeed, I have implemented it in a single program-controlled processor. In such an arrangement, of course, it is quite difficult to perform the updating on a real-time basis at the speeds at which images are typically scanned. However, the steps are such that those skilled in the art will recognize them as being readily implemented in dedicated hardware that will permit processing in real time. For this reason, I have arranged the updating in such a manner that the image processing can be performed on a one-pass basis; that is, although a several-scan-line delay is imposed in order to enable the system to obtain the data for a complete window for each pixel, there is no need to perform a first pass in which the data for the complete image are obtained to compute parameters and then return in a second pass to process data on the basis of those computed parameters.

In a real-time system the quantizer begins producing output pixel values once the window lag has occurred. In each pixel time, the quantizer compares the input value with the established threshold values and generates an output in accordance with the result in the manner described above. It also computes or adjusts several intermediate values, which are used once every other scan line to update the values BCK__LEVEL, IMG and UPPER__THR so as to establish new threshold values for use on the next two scan lines.

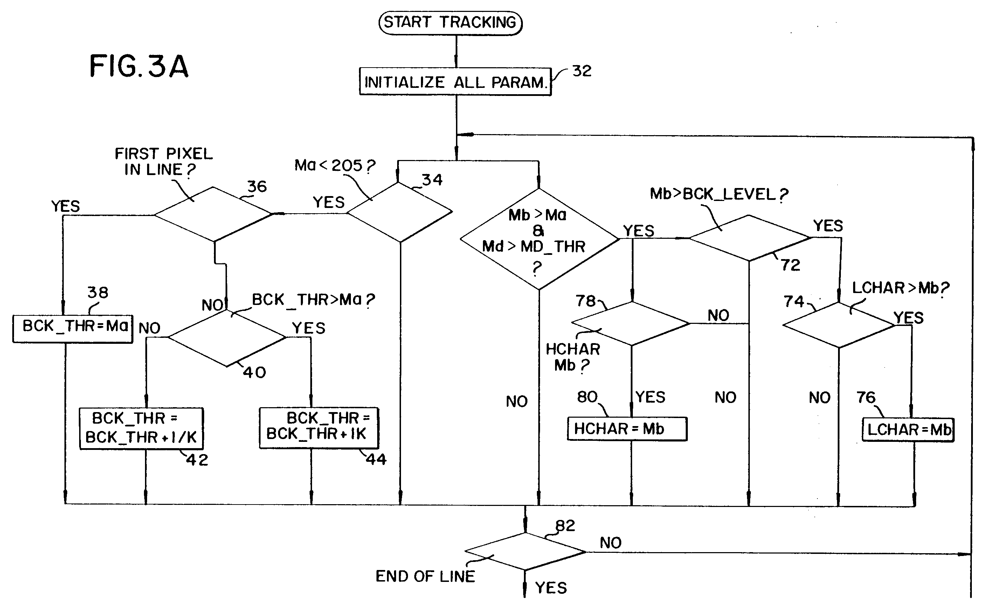

Fig. 3A depicts the part of the routine that is performed at each pixel time. The general purpose of this part of the routine is to adjust three intermediate values BCK__THR, HCHAR, and LCHAR, which are used at the end of every two scan lines to provide new values to BCK__LEVEL, IMG, and UPPER__THR.

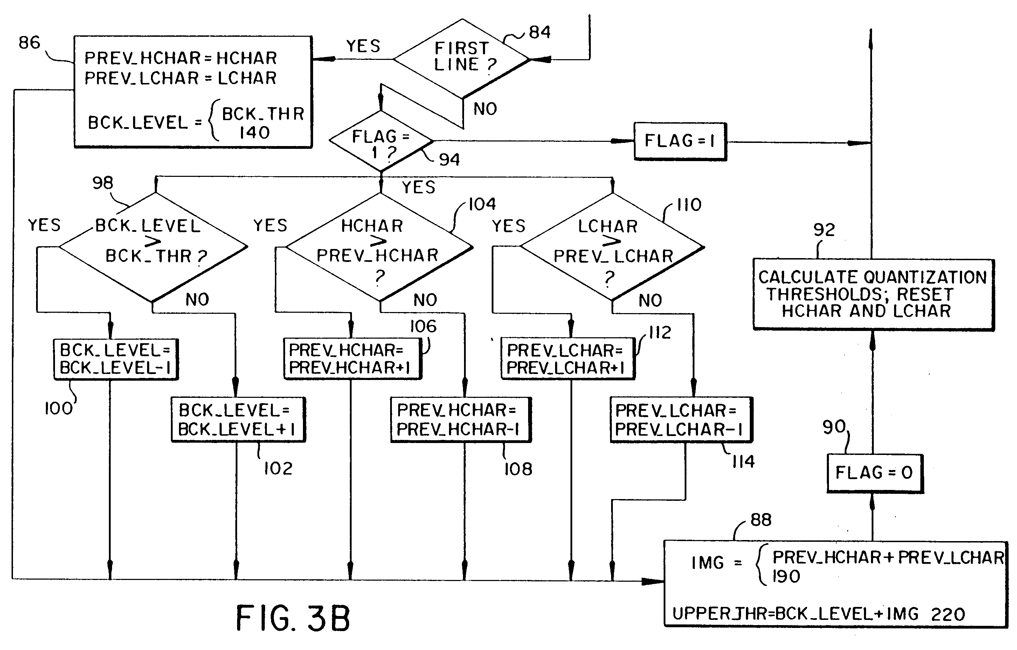

At the beginning of an image, the routine of Fig. 3A initializes BCK__THR, HCHAR, and LCHAR to values of 0, 128, and 200, respectively, and it establishes thresholds in accordance with BCK__LEVEL, IMG, and UPPER__THR values of 0, 180, and 220, respectively. That is, the quantization levels that the illustrated embodiment employs on the first scan line does not depend on the input values. This is not a necessary characteristic of the invention. Other embodiments, which may, for instance, use a two-pass operation or compute initial values from the several lines acquired before output-pixel-value generation commences, may employ input-dependent parameters from the very beginning. Ordinarily, however, the appearance of the first few scan lines is not important, and the illustrated embodiment thus assigns the first-line quantization levels arbitrarily. This is the function of step 32 of Fig. 3.

After step 32, Fig. 3A departs from the usual flowchart convention and depicts two parts of the routine as occurring in parallel. One part, which begins with a decision step 34, is used to develop intermediate value BCK__THR, from which the background- and signal-range-determining parameter BCK__LEVEL is obtained.

Determination of BCK__THR is based on the mean $M_a$ of the raw-version pixel values in each larger window 28. As a result of this part of the routine, BCK__THR tends toward the average of these local mean values. In the illustrated embodiment, however, a local mean $M_a$ affectsBCK__THR only if it is less than a predetermined value in the darker part of the input range. Specifically, the illustrated embodiment is intended for eight-bit input values, which range from 0 through 255, and the BCK__THR computation is based only on pixels in regions light enough that their $M_a$ values are less than 205. This is the purpose for step 34, which causes the BCK__THR-adjusting steps to be bypassed if $M_a$ is not less than 205.

If $M_a$ is less than 205, on the other hand, the routine proceeds to step 36, in which it determines whether the pixel under consideration is the first one in a scan line. If so, BCK__THR is simply set equal to $M_a$, as block 38 indicates. Otherwise, BCK__THR is compared with $M_a$, as block 40 indicates, and BCK__THR is then adjusted up or down toward the $M_a$ value, as blocks 42 and 44 indicate. The adjustment increment I/K is the reciprocal of the width of the larger window; that is, it requires K pixel times to change BCK__THR by one unit out of the 256-unit range of possible input values.

The other part of the Fig. 3A routine, which begins with a decision 46, is used to adjust the two intermediate values HCHAR and LCHAR on which the IMG value is based. (The other quantization-level-determining parameter, UPPER__THR, is based on both BCK__LEVEL and IMG.) HCHAR and LCHAR are the highest and lowest raw-version pixel values, respectively, that have been encountered in the current scan line, fall within the signal range, and meet certain criteria that brand them as being in the "interesting" parts of the image. The determination of whether a pixel is "interesting" is made in step 46, which applies two tests. The first test determines whether the smaller-window mean $M_b$ exceeds the larger-window mean $M_a$. The second test determines whether the variation within the larger window exceeds a general background variation level.

Specifically, the "activity" level $M_d$ is a measure of the variation of the raw pixel values within the larger window 28. (Of course, there is no need for the activity level $M_d$ to be computed over the same window as the neighborhood average $M_a$ is, but I have found it convenient to use the same window for both.) Any variation measure can be used for this purpose, the common one being standard deviation. Because of computation-time considerations, however, I prefer to use as a variation measure the average absolute mean deviation. In the illustrated embodiment, in other words,

$$M_a = \frac{I}{KL} \sum_{i=y}^{y+L-1} \sum_{j=x}^{x+K-1} |P_{ij} - M_w|, \qquad (3)$$

where $P_{ij}$ is the raw-version value of the jth pixel in the ith row, K is the larger-window width, and L is the larger-window height, $M_w$ is the average level in the window over which the activity level is computed (and is, in the illustrated embodiment, equal to $M_a$), and the upper-left-corner pixel in that window is the xth pixel is the yth row.

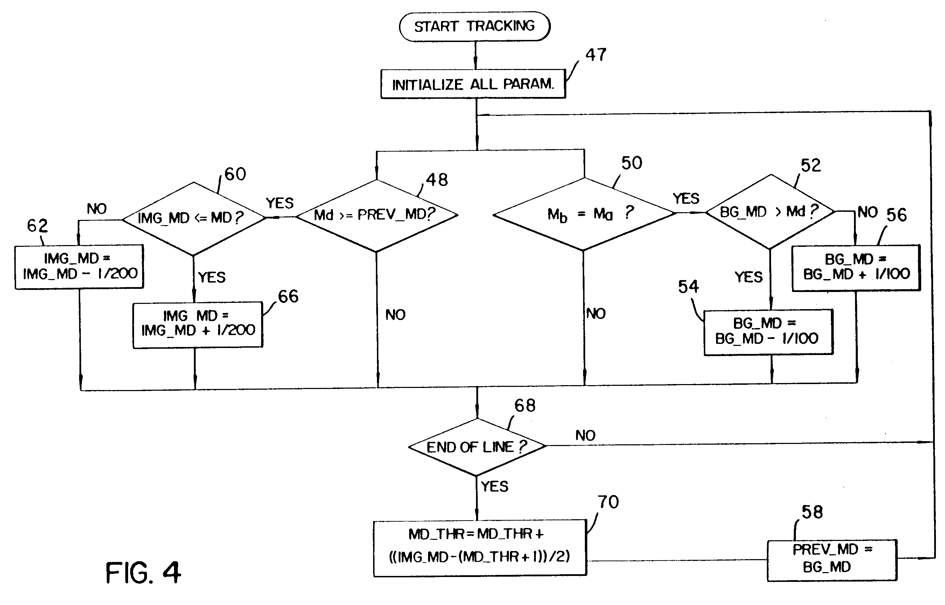

This value is compared with a general background activity level MD__THR, which is computed in such a way as to tend toward an activity-level value that would result from computing the variation over the entire raw version of the image. Of course, a value strictly equal to one computed over the entire image cannot be obtained in a one-pass arrangement. But a good substitute can be obtained by using an approach depicted in Fig. 4 for determining MD__THR. If the filter 24 is of the type described in my United States patent application for a Method and Apparatus Spatially Variant Filtering filed on even date herewith, such an MD__THR value will be available from the filter 24.

The overall approach in the Fig. 4 routine is to keep a single value of the activity threshold MD__THR throughout a whole scan line but to update it at the end of each scan line in accordance with an intermediate variation-indicating value IMG__MD. The routine so varies IMG__MD during the line scan that it tends toward the average of the variations in the windows of those pixels whose pixel variations exceed a level PREV__MD that the routine has identified as being the average variation in certain low-spatial-frequency regions of the image.

At the beginning of each image, the Fig. 4 routine initializes the activity threshold MD__THR as well as three variables IMG__MD, PREV__MD, and BG__MD used in the routine, as block 47 indicates. In the illustrated embodiment, in which eight-bit resolution yields a pixel-value range of 0-255, I have used an initialization value of eight for all three of these variables, but this value is not at all critical.

Like Fig. 3, Fig. 4 departs from the usual flowchart convention by depicting two parts of the routine as operating in parallel. One part, which will be described below, begins with decision block 48, while the other part, which is employed to establish the average activity level (i.e., variation) PREV__MD in low-frequency regions, begins with another decision block 50. Like MD__THR, PREV__MD is updated only at the end of each scan line. In the interim, a temporary value BG__MD, from which it is updated, is adjusted by the part of the Fig. 4 routine that starts with block 50.

The purpose of this block is to identify pixels that are most likely to be in low-spatial-frequency regions. For this purpose, block 50 employs as a criterion the equality of $M_a$ and $M_b$, i.e., of the larger- and smaller-window averages. If the pixel under consideration meets this criterion, then BG__MD is adjusted up or down slightly toward the activity level $M_d$ within that particular pixel's larger window. Specifically, if a step represented by decision block 50 determines that BG__MD exceeds $M_d$, then BG__MD is decreased by 1/100 in a step represented by block 54; that is, step 54 must be reached one hundred times to change BG__MD by one unit at the pixel-value resolution. If BG__MD does not exceed $M_d$, it is increased by 1/100 in a step represented by block 56.

Such an adjustment of BG__MD occurs for every pixel that meets the criterion of block 50. At the end of every scan line, the average low-frequency-region activity-level value PREV__MD is updated to equal BG__MD, as block 58 indicates.

This PREV__MD value is used in the first step, represented by block 48, of the other parallel routine. Specifically, the decision step of block 48 compares the current pixel's activity level $M_d$ with the low-frequency-region activity level PREV__MD. If it is not at least equal to that low-frequency-region activity level, then the value of the variation within the current pixel's window will not be used to affect the activity threshold MD__THR. Otherwise, the temporary-value variable IMG__MD from which the activity-level threshold MD__THR is updated is adjusted slightly up or down toward the variation within the current pixel's window, as blocks 60, 62, and 66 indicate.

6

Then, when the end of a scan line is reached as determined by a block-68 decision, the activity threshold MD__THR is adjusted in accordance with the equation of block 70. As that block shows, the activity threshold MD__THR is essentially adjusted half way from its previous value to the current value of IMG__MD at the end of each line. (The "bias" represented by the "+1" in the equation is used only to overcome an artifact of the limited-precision arithmetic used in the calculation.)

The combination of criteria imposed by decision block 46 (Fig. 3A) tends to identify "interesting" pixels, i.e., pixels at character edges. It is only when a pixel value meets these criteria and its filtered value $M_b$ additionally falls within the signal range that it ultimately affects the IMG value from which the quantization thresholds are determined. The requirement that the filtered pixel value $M_b$ additionally fall within the signal range is imposed by a test represented by block 72. If $M_b$ is in the signal range, it is compared with LCHAR, which is adjusted downward if $M_b$ is less than LCHAR. Otherwise, LCHAR remains the same. That is, LCHAR stores the (filtered) value of the lowest-valued "interesting" pixel encountered so far in the current scan line. Blocks 74 and 76 represent this updating of LCHAR.

Regardless of whether the filtered value $M_b$ of the current pixel exceeds the background level, $M_b$ is subjected to the test represented by block 78, in which it is compared with HCHAR. If the filtered value $M_b$ exceeds HCHAR, then HCHAR is increased to that value, as block 80 indicates. That is, HCHAR is a store of the highest-valued "interesting" pixel encountered so far in the current scan line. Since HCHAR ratchets upward, it also ends up within the signal range even though the routine reaches steps 78 and 80 regardless of the outcome of test 72.

As was stated above, the values determined during a scan line are used to update the threshold-level-determining parameters at the ends of alternate scan lines. Accordingly, the routine branches on a determination, represented by block 82, of whether the last pixel in a line has been reached. If not, the routine loops back to perform the previous steps for the next pixel. At the end of a scan line, however, the routine proceeds to the part depicted in Fig. 3B.

At the end of the first scan line, the routine branches at a decision represented by block 84 to step 86, in which two intermediate parameters PREV__HCHAR and PREV__LCHAR are set to HCHAR and LCHAR, respectively. Additionally, BCK__LEVEL is set to the lower of 160 and either BCK__THR, as shown in the drawing, or some user-defined constant added to or multiplied by BCK__LEVEL in a more-elaborate embodiment. The routine then proceeds to step 88, in which it computes the other two quantization-threshold-determining parameters IMG and UPPER__THR. Specifically, IMG is equal to the lower of 191 and the average of PREV__HCHAR and PREV__LCHAR. Similarly, UPPER__THR is set equal to either 222 or BCK__LEVEL + IMG, whichever is lower.

With these three values determined, the routine resets a toggle flag in step 90 for purposes that will be explained below and proceeds to the step represented by block 92, in which all thresholds are set in accordance with the approach previously described. These thresholds are then employed for the next two scan lines of pixel values in the output of the adaptive filter 24. At the same time, the values of HCHAR and LCHAR are reset to their initialization values of 128 and 200, respectively.

At the end of every line but the first, the negative result of the block-84 test directs the routine to the step represented by block 94, in which the previously mentioned toggle flag is tested. In the illustrated embodiment, the thresholds are updated only after every other line, and the flag indicates whether the current line is an odd line or an even line. If the value of the flag is zero, it is set to one in step 96, and the routine returns to the steps of Fig. 3A to process the first pixel in the next line. If the value of flag already was one, however, the routine updates BCK__LEVEL, PREV__HCHAR, and PREV__LCHAR in steps that Fig. 3B represent as occurring in parallel.

Specifically, blocks 98, 100, and 102 represent incrementing or decrementing the quantization-threshold-determining parameter BCK__LEVEL by one in accordance with whether the intermediate parameter BCK__THR is greater or less than the previous BCK__LEVEL value. Blocks 104, 106, and 108 represent performing similar updating of PREV__HCHAR in accordance with the value of HCHAR, and blocks 110, 112, and 114 represent a similar adjustment of PREV__LCHAR in accordance with the value of LCHAR. The two other quantization-threshold-determining parameters IMG and UPPER__THR are then computed in step 88, the flag is reset in step 90, and the thresholds are recalculated in step 92 as before. The routine then returns as before to begin processing the next scan line.

We now review briefly the effects of the routine of Figs. 3A and 3B. The boundary BCK__LEVEL between the background and signal ranges is varied slowly from line to line in such a manner as to tend toward an average of all of those raw-version pixel values that fall within approximately the lightest 80% of the possible values of the eight-bit input resolution. Since most of a typical text image consists of background, the resultant value is one that is close to the average background level, particularly with the "bias" provided by eliminating from consideration the darkest 20% of the possible values. The resultant

EP 0 531 923 A2

value is then used as the lowest quantization threshold. Consequently, most of the image that is not part of a character, even though it is represented by a significant range of values in the input, is represented by a single output value. This maximizes contrast and avoids wasting a significant part of the output resolution on background areas, which are not of interest.

Similarly, the PREV__HCHAR and PREV__LCHAR values vary slowly from scan line to scan line, tending toward the average high and low $M_b$ values of those pixels identified by the variation and $M_a$-$M_b$ criteria as being "interesting." The IMG value, which is the arithmetic mean of these values, is then used to "center" the quantization thresholds, in the manner described above, over the values thus identified as being of most interest. In this way, the illustrated embodiment adaptively concentrates its available resolution in the areas of most interest.

Of course, the illustrated embodiment is merely one example of the manner in which the present invention can be employed. In principle, for instance, the BCK__THR updating of steps 36, 38, 40, 42, and 44 could be based on the small-window mean $M_b$ rather than on the large-window mean $M_a$; in fact, it could be based on the values of individual pixels. Additionally, while I have found that the results tend to be better if a "bias" of the type imposed by step 34 is used, such a bias is not required, and, when it is used, values differing from the one that I use should also produce good results.

Also, much of the contrast advantages of the present invention can be obtained without limiting the span of the quantization thresholds in the signal range as I have done by assigning values based on the parameters IMG and UPPER__THR. Indeed, this is the approach set forth above for cases in which the number of output bits per pixel equals the number of input bits per pixel.

It is thus apparent that the teachings of the present invention can be incorporated in a wide range of embodiments. The invention thus constitutes a significant advance in the art.

**Claims**

1. In the method of image processing that comprises scanning an image source to generate raw pixel values representing a raw version of the source's image, generating processed pixel values by performing an image process on the raw pixel values, and storing the processed image values in an appropriate medium or displaying the image represented thereby, the image process comprising a set of at least one processing step, each processing step in the set producing associated pixel-value outputs representing a version of the image by processing associated pixel-value inputs representing the values of corresponding pixels in at least one of the other versions of the image, the improvement wherein one said processing step, denominated quantization step, comprises:

    A) deriving for each of a plurality of pixels a background range from the values of other pixels in a version of the image;

    B) establishing a set of quantization levels outside the background range; and

    C) generating the pixel-value outputs associated with the quantization step by quantizing the pixel-value inputs associated with the quantization step in accordance with the set of quantization levels thus established.

2. A method as defined in claim 1 wherein the background range comprises all values on one side of a background level.

3. A method as defined in claim 2 wherein the step of establishing quantization levels comprises establishing a variation threshold, establishing variation windows for image pixels, computing for each of those pixels the variation of the pixel values in its window in one of the Versions of the image, and determining the quantization levels as a function of the background level and the values, in one of the versions of the image, of only the pixels whose window variations as thus computed exceed the variation threshold.

4. A method as defined in claim 3 wherein the step of establishing quantization levels comprises establishing for each pixel a local window that contains that pixel, establishing for each pixel a neighborhood window that contains the local window as well as pixels not in the local window, computing neighborhood and local window averages of the values of pixels in the neighborhood and local windows, respectively, and determining the quantization levels as a function of the background level and the values, in one of the versions of the image, of only the pixels for which the neighborhood window average is less than the local window average.

8

**5.** A method as defined in claim 2 wherein the step of establishing quantization levels comprises establishing for each pixel a local window that contains that pixel, establishing for each pixel a neighborhood window that contains the local window as well as pixels not in the local window, computing neighborhood and local window averages of the values of pixels in the neighborhood and local windows, respectively, and determining the quantization levels as a function of the background level and the values, in one of the versions of the image, of only the pixels for which the neighborhood window average is less than the local window average.

**6.** In an apparatus for recording an image of an image source that comprises means for scanning the image source to generate raw pixel values representing a raw version of the source's image, means for generating processed pixel values by performing an image process on the raw pixel values, and means for storing the processed image values in an appropriate medium or displaying the image represented thereby, the means for generating processed pixel values comprising a set of at least one processing circuit, each processing circuit in the set producing associated pixel-value outputs representing a version of the image by processing associated pixel-value inputs representing the values of corresponding pixels in at least one of the other versions of the image, the improvement wherein one said processing circuit, denominated a quantization circuit, comprises:

A) means for deriving for each of a plurality of pixels in a given image a background range from the input values of other pixels in a version of the given image;

B) means for establishing a set of quantization levels outside the background range; and

C) means for generating pixel-value outputs associated with the quantization step by quantizing the pixel-value inputs in accordance with the set of quantization levels thus established.

**7.** An apparatus as defined in claim 6 wherein the background range comprises all values on one side of a background level.

**8.** An apparatus as defined in claim 7 wherein the means for establishing quantization levels comprises means for establishing a variation threshold, establishing variation windows for image pixels, computing for each of those pixels the variation of the pixel values in its window in one version of the image, and determining the quantization levels as a function of the background level and the values, in one of the versions of the image, of only the pixels whose window variations as thus computed exceed the variation threshold.

**9.** An apparatus as defined in claim 8 wherein the means for establishing quantization levels comprises means for establishing for each pixel a local window that contains that pixel, establishing for each pixel a neighborhood window that contains the local window as well as pixels not in the local window, computing neighborhood and local window averages of the values of pixels in the neighborhood and local windows, respectively, and determining the quantization levels as a function the background level and the values, in one of the versions of the image, of only the pixels for which the neighborhood window average is less than the local window average.

**10.** An apparatus as defined in claim 7 wherein the means for establishing quantization levels comprises means for establishing for each pixel a local window that contains that pixel, establishing for each pixel a neighborhood window that contains the local window as well as pixels not in the local window, computing neighborhood and local window averages of the values of pixels in the neighborhood and local windows, respectively, and determining the quantization levels as a function the background level and the values, in one of the versions of the image, of only the pixels for which the neighborhood window average is less than the local window average.

FIG. 1

FIG. 2

EP 0 531 923 A2

# FIG.3A

START TRACKING

INITIALIZE ALL PARAM. — 32

FIRST PIXEL IN LINE ? — 36

Ma < 205 ? — 34

Mb > Ma & Md > MD_THR ? 

Mb > BCK_LEVEL ? — 72

LCHAR > Mb ?

YES

YES

BCK_THR > Ma ? — 40

NO

NO

YES

BCK_THR = Ma — 38

HCHAR Mb ? — 78

NO

74 — YES

BCK_THR = BCK_THR + I/K — 42

BCK_THR = BCK_THR + IK — 44

NO

80 — YES

NO

NO

76

HCHAR = Mb

LCHAR = Mb

NO

END OF LINE — 82

NO

YES

EP 0 531 923 A2

FIG. 3B

FIG. 4

EP 0 531 923 A2